Europäisches Patentamt

European Patent Office

Office européen des brevets

(19)

(11) Publication number: **0 284 760**

**A1**

# (12) EUROPEAN PATENT APPLICATION

(21) Application number: **88102354.3**

(22) Date of filing: **18.02.88**

(51) Int. Cl.4: **G01C 19/28**

(30) Priority: **26.03.87 US 30310**

(43) Date of publication of application:
**05.10.88 Bulletin 88/40**

(84) Designated Contracting States:
**DE FR GB IT**

(71) Applicant: **ALLIED-SIGNAL INC.**
**Columbia Road and Park Avenue P.O. Box 2245R**
**Morristown New Jersey 07960(US)**

(72) Inventor: **Schuma, Richard Francis**
**c/o ALLIED-SIGNAL INC. P.O. Box 2245R**
**Morristown New Jersey 07960(US)**

(74) Representative: **Brock, Peter William**
**ALLIED-SIGNAL INC. Law Department 48**
**Leicester Square**
**London WC2H 7LW(GB)**

(54) Optical pick-off for gyroscopic sensor.

(57) Apparatus is disclosed which embodies an integrated assembly of optical and electro-optical components including a light source, a beam splitter a collimator and a detector. A spherical gyro rotor carries a mirror which reflects light passing from the light source through the beam splitter and the collimator. A detector senses when light is directed to the mirror at an angle greater than zero degrees, and provides electrical signals which energize torquers for precessing the rotor in two orthogonal directions whereby the angle of incidence of the light returns to zero degrees, and the orientation of the rotor is stabilized to a high degree of accuracy with a low environmental sensitivity.

FIG. 3

EP 0 284 760 A1

## OPTICAL PICK-OFF FOR GYROSCOPIC SENSOR

### BACKGROUND OF THE INVENTION

This invention relates generally to gyroscopic sensors and particularly to an angle sensing device embodying an integrated assembly of optical and electro-optical components to form a small, stable, and highly sensitive pick-off to stabilize the orientation of a spherical rotor in, for example, a gas bearing gyroscope to a high degree of accuracy and with low environmental sensitivity.

Prior to the present invention arrangements for detecting angular displacement of a gyro rotor have used electro-magnetic, capacitive and fluidic pick-offs as well as optical pick-offs. The prior art devices commonly use a stationary detector or detectors whose output is sensitive to the distance between the detector and a portion of the rotor, or the orientation of the rotor relative to the detector. Electro-magnetic pick-offs are costly and require accurately machined components. Both electro-magnetic and capacitive pick-offs require modulating and demodulating circuitry. Fluidic pick-offs are difficult to manufacture. Prior art optical pick-off - schemes feature a pulse duration, modulated output locked to the rotor speed in its repetition rate.

Further, previous arrangements for sensing rotor angular displacement have exhibited a low angular sensitivity, and performance has been seriously affected by magnetic fields which are inherent in mechanical gyroscopes of the type contemplated.

A prior art optical sensor known to the applicant is described in U.S. Patent 3,915,019 issued on October 28, 1975 to Bart J. Zoltan and assigned to the Singer Company, Little Falls, New Jersey. The arrangement described features an optical system which senses light reflected from a repetitive pattern of alternate pseudo-triangular reflective and non-reflective areas provided on the surface of a spherical gyro rotor. The waveform representing the level of reflected light is pulse duration modulated by the pattern in a manner directly proportional to displacement of the gyro rotor about an output axis, and hence differs from the present invention to be herein described, as will be hereinafter discerned.

### SUMMARY OF THE INVENTION

This invention contemplates an optical sensor of the type described featuring a light source, a beam splitter, a four quadrant detector and a collimator configured in a stable monolithic arrangement that is insensitive to vibrations, temperature changes and magnetic and electrical fields as may exist.

Light from the light source is directed by the beam splitter and collimator to a flat mirror that is disposed on a rotating spherical rotor that is part of, for example, a gas bearing gyroscope. After reflection from the mirror the light is imaged on the detector by the collimator via the beam splitter. When the light is directed at an angle of incidence of zero degrees on the mirror, an equal amount of energy will be incident on each quadrant of the detector. If the angle of incidence is other than zero degrees the light energy on adjacent detector quadrants differs. The difference in light energy is used to generate error signals in each of two orthogonal directions and which error signals are used to apply a magnetically induced torque to the spherical rotor to cause a precession of the rotor until the amount of light incident on the detector quadrants is equalized.

### BRIEF DESCRIPTION OF THE DRAWING

Figure 1 is a schematic drawing illustrating the operation of a spherical gyro rotor.

Figure 2 is a diagrammatic representation illustrating the invention.

Figure 3 is a block diagram-schematic diagram illustrating a gyroscopic system including the invention.

### DETAILED DESCRIPTION OF THE INVENTION

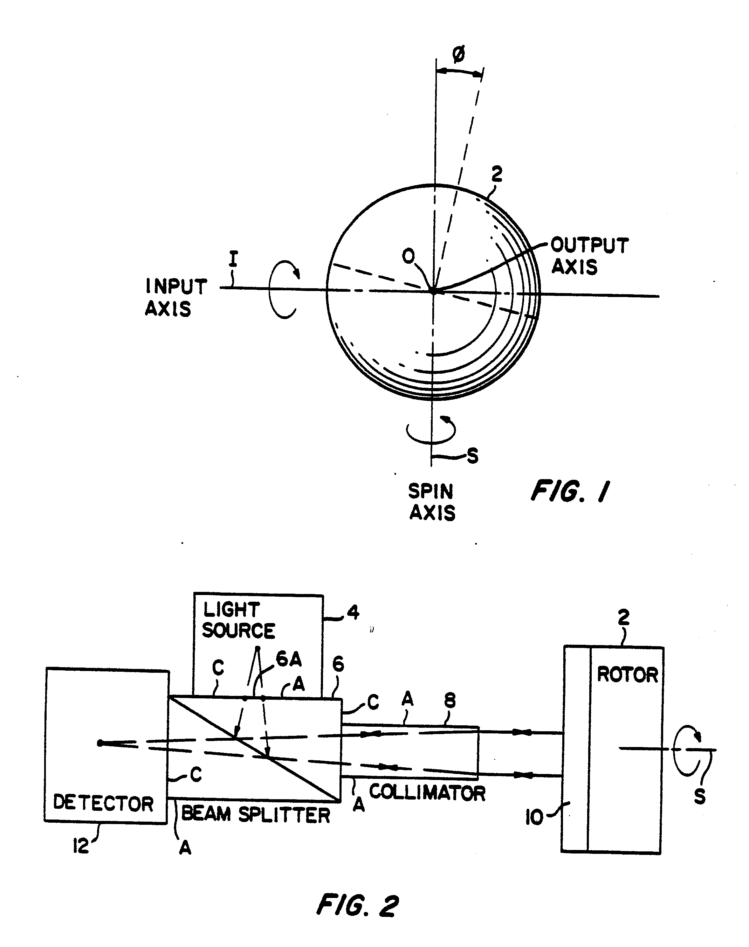

With reference first to Figure 1 a spherical gyro rotor 2 forms an inertial mass spinning continuously about a spin axis S. Rotation about an input axis I normal to spin axis S causes corresponding rotation about an output axis O normal to both the spin and input axes. The resulting tilt angle $\emptyset$ is a measurement of the angular acceleration of a platform or the like (not otherwise shown) supporting rotor 2 about input axis I. If rotor 2 were a "free rotor", i.e., with two degrees of freedom instead of a single degree of freedom, then output axis O would also serve as an input axis to induce rotation about axis I which likewise would function as an output axis.

A pick-off is required to detect angle $\emptyset$, i.e. to detect the rotation of rotor 2 about output axis O. It is this type of device to which the present invention is directed. Only as much of a gyroscopic system as is necessary to understand the invention has been herein described. All other details of gyroscopic systems which may be considered are conventional and will not herein be further discussed.

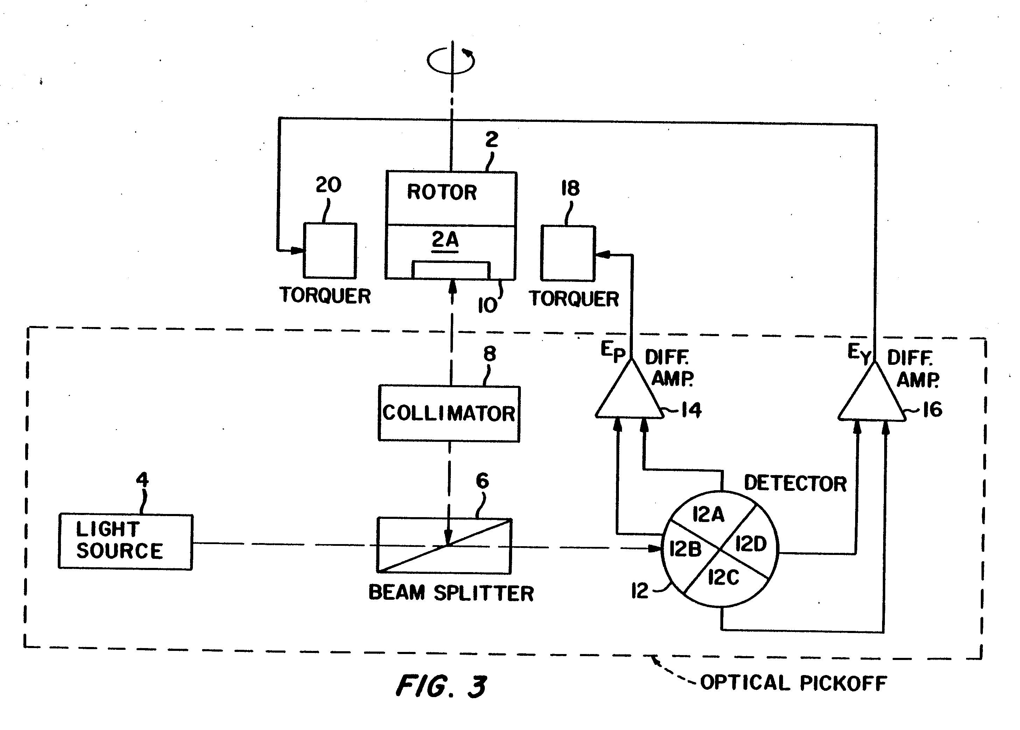

With reference to Figures 2 and 3, light from a light source 4, which may be a light emitting diode, is directed by a conventional beam splitter 6 and a conventional collimator 8 to an external flat mirror 10 disposed on rotating spherical rotor 2.

After reflection from mirror 10, light is imaged on a detector 12, which is a conventional four-quadrant detector, by collimator 8 and beam splitter 6.

When the light is directed at an angle of incidence of zero degrees on mirror 10, an equal amount of light energy will be incident on each of the four quadrants 12A, 12B, 12C and 12D of detector 12 as shown in Figure 3. If the angle of incidence is greater than zero degrees then the light energy on adjacent quadrants will no longer be equal.

With specific reference to Figure 2, the optical sensor of the invention may be formed by directly attaching, as by cementing, light source 4 to beam splitter 6; detector 12 to beam splitter 6; and collimator 8 to the beam splitter at surfaces carrying the designation C to form a small, compact monolithic assembly. The several components have appropriate light absorbing surfaces carrying the designation A and beam splitter 6 has an aperture stop 6A, the same being understood by those skilled in the art and not requiring further consideration for the purposes of describing the present invention.

As aforenoted, if the angle of incidence of light on mirror 10 is greater than zero degrees, then the light energy on adjacent detector quadrants 12A - 12D (Figure 3) is different. This difference is used to generate error signals in each of two orthogonal directions, and which error signals are used to apply a magnetically induced torque to rotor 2 to cause a precession of the rotor until the amount of light incident on each of the detector quadrants has been equalized.

Thus, with reference to Figure 3, wherein the optical pick-off arrangement of the invention is particularly shown, quadrants 12A and 12B of detector 12 are connected to a differential amplifier 14 and quadrants 12C and 12D of the detector are connected to a differential amplifier 16. Amplifier 14 provides an error signal in one orthogonal direction which may correspond, for example, to the pitch axis of an aircraft, and which error signal is designated as $E_P$. Amplifier 16 provides an error signal in the other orthogonal direction which may correspond, for example, to the yaw axis of the aircraft, and which signal is designated as $E_Y$.

Signal $E_P$ is applied to a pitch axis torquer 18 which is part of the gyroscopic system for energizing said torquer, and signal $E_Y$ is applied to a yaw axis torquer 20 which is likewise part of the gyroscopic system for energizing said torquer. Torquers 18 and 20 interact with gyroscopic rotor 2 to cause the aforenoted rotor precession as will next be described.

Rotor 2 may be of a suitable material to provide the aforenoted inertial mass for the purposes intended. As shown in Figure 3, rotor 2 may have a portion 2A cemented or otherwise affixed to the spherical rotor surface, and which portion 2A may be of an appropriate magnetic material. Portion 2A has, affixed thereto, as by plating or otherwise, a flat mirror 10.

Upon signals $E_P$ and/or $E_Y$ being generated by the respective differential amplifers 14 and/or 16, the respective torquers 18 and/or 20 are energized by the signals to electro-magnetically interact with magnetic section 2A of rotor 2 to cause the rotor to precess until the light energy on each of the detector quadrants is equalized. Angle ∅ is thus reduced to zero degrees and the orientation of rotor 2 is stablized.

It will now be understood that the sensitivity of the disclosed device is dependent upon the amount of optical power emitted by light source 4 and detector 12, and the electrical noise inherent in amplifiers 14 and 16, as well as the focal length and relative aperture of collimator 8. State-of-the-art components are available wherein a heretofore unavailable low noise-equivalent angle may be achieved. Likewise, light emitting diodes as light sources are available to decrease the noise-equivalent angle by as much as an order of magnitude without increasing the size of the device.

There has thus been described an integrated assembly of optical and electrical-optical components for forming a small, stable and highly sensitive angle sensing device for stabilizing the orientation of a spherical rotor in a gyroscope to a high accuracy and with low environmental sensitivity. The arrangement described is thus advantageous over prior art arrangements for the purposes intended.

With the above description of the invention in mind reference is made to the claims appended hereto for a definition of the scope of the invention.

## Claims

1. Apparatus for stabilizing the orientation of a spinning spherical member about an output axis, comprising:

the spherical member having a magnetic section;

a flat mirror disposed on the spherical member;

a light source;

an optical arrangement for directing light from the light source to the mirror, said mirror receiving the directed light and reflecting the received light at an angle of incidence commensurate with the orientation of the spherical member about the output axis;

detector means;

the light reflected from the mirror being directed to the detector means by the optical arrangement, with the detector means detecting said light and providing electrical signals commensurate with the orientation of the spherical member about the output axis; and

electro-magnetic means connected to the detector means and energized by the electrical signals therefrom for magnetically interacting with the magnetic section of the spherical member to precess said member, whereby the angle of incidence is reduced to zero degrees and the orientation of the spherical member about the output axis is stabilized.

2. In combination with a gyroscopic device of the type including a rotor having a spherical surface and forming a mass spinning about a spin axis, and gyroscopically rotating about an input axis normal to the spin axis causing corresponding rotation about an output axis normal to both the spin and input axes, apparatus for detecting the angle of the spherical rotor relative to the output axis and for precessing said rotor to reduce said angle to zero, comprising:

the rotor having a magnetic section;

a flat mirror disposed on the spherical surface of the rotor;

a light source;

an optical arrangement for directing light from the light source to the mirror, said mirror receiving the directed light and reflecting the received light at an angle of incidence commensurate with the angle of the rotor relative to the output axis;

detector means;

the light reflected from the mirror being directed to the detector means by the optical arrangement, with the detector means detecting said light and providing electrical signals commensurate with the angle of the rotor relative to the output axis; and

electro-magnetic means connected to the detector means and energized by the electrical signals therefrom for magnetically interacting with the magnetic section of the rotor to precess the rotor, whereby the angle of said rotor relative to said output axis is reduced to zero.

3. Apparatus as described by claim 2, wherein the detector means includes:

first and second adjacent detector quadrants for detecting light reflected by the mirror and directed to the detector means, with each of said first and second detector quadrants detecting differing amounts of light commensurate with the angle of the rotor in a first direction and providing corresponding electrical signals;

third and fourth adjacent detector quadrants for detecting light reflected by the mirror and directed to the detector means, with each of said third and fourth detector quadrants detecting differing amounts of light commensurate with the angle of the rotor in a second direction orthogonal to the first direction and providing corresponding electrical signals;

first means connected to the first and second detector quadrants and responsive to the electrical signals therefrom for providing a first error signal;

second means connected to the third and fourth detector quadrants and responsive to the electrical signals therefrom for providing a second error signal; and

utilizing means for utilizing the first and second error signals.

4. Apparatus as described by claim 3, wherein the electro-magnetic means includes:

a first electro-magnetic member connected to the first means and energized by the first error signal therefrom for magnetically interacting with the magnetic section of the rotor to precess the rotor; and

a second electro-magnetic member connected to the second means and energized by the second error signal therefrom for magnetically interacting with the magnetic section of the rotor to precess the rotor.

5. Apparatus as described by claim 1, wherein the optical arrangement includes;

a beam splitter for receiving the light from the light source;

a collimator for receiving light from the beam splitter and for directing light to the mirror;

the collimator receiving light reflected by the mirror and;

the beam splitter receiving light from the collimator and directing light to the detector.

6. Apparatus as described by claim 2 wherein the optical arrangement includes:

a beam splitter for receiving the light from the light source;

a collimator for receiving light from the beam splitter and for directing light to the mirror;

the collimator receiving light reflected by the mirror; and

the beam splitter receiving light from the collimator and directing light to the detector.

7. Apparatus as described by claim 1, wherein the detector means includes:

first and second adjacent detector quadrants for detecting light reflected by the mirror and directed to the detector means, with each of said first and second quadrants detecting differing amounts of light commensurate with the orientation of the spherical member in a first direction and providing corresponding electrical signals;

third and fourth adjacent detector quadrants for detecting light reflected by the mirror and directed to the detector means, with each of said third and fourth detector quadrants detecting differing amounts of light commensurate with the orientation of the spherical member in a second direction orthogonal to the first direction and providing corresponding electrical signals;

first means connected to the first and second detector quadrants and responsive to the electrical signals therefrom for providing a first error signal;

second means connected to the third and fourth detector quadrants and responsive to the electrical signals therefrom for providing a second error signal; and

utilizing means for utilizing the first and second error signals.

8. Apparatus as described by claim 1, wherein the electro-magnetic means includes:

a first electro-magnetic member connected to the first means and energized by the first error signal therefrom for magnetically interacting with the magnetic section of the spherical member to displace the member about the output axis; and

a second electro-magnetic member connected to the second means and energized by the second error signal therefrom for magnetically interacting with the magnetic section of the spherical member to displace the member about the output axis.

Ø

2

OUTPUT
AXIS

O

I

INPUT
AXIS

S

SPIN
AXIS

*FIG. 1*

LIGHT
SOURCE  4

C  6A  6

A

C  A  8

2

ROTOR

DETECTOR

C

BEAM SPLITTER

A

COLLIMATOR

A

S

12

A

10

*FIG. 2*

*FIG. 3*

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | US-A-3 254 537 (D.F. ELWELL)<br>* Column, line 72 - column 2, line 23; column 3, lines 26-35; column 3, lines 47-60; column 4, lines 2-20; figures 1,3,4,5 * | 1-8 | G 01 C 19/28 |
| A | US-A-3 628 385 (L.M. ROSS)<br>* Whole document * | 1-8 | |
| A | US-A-3 501 966 (S. SHAPIRO)<br>* Column 7, lines 51-65; column 8, lines 16-25; column 9, lines 13-31; figures 1,2,4,5 * | 1-8 | |
| A,D | US-A-3 915 019 (B.J. ZOLTAN)<br>* Figure 2 * | 1 | |

**TECHNICAL FIELDS SEARCHED (Int. Cl.4)**

G 01 C

The present search report has been drawn up for all claims

| Place of search | Date of completion of the search | Examiner |
|---|---|---|
| THE HAGUE | 12-07-1988 | HUNT J.H. |